# EUROPEAN PATENT APPLICATION

(11) **EP 4 312 061 A1**
(43) Date of publication of application: **31.01.2024**
(21) Application number: 23185217.9
(22) Date of filing: 13.07.2023
(51) Int. Cl.: G01S 17/894, G01S 7/4863, G01S 7/4865, G04F 10/00

(54) **SYSTEMS AND METHODS FOR POWER-EFFICIENT TIME TO DIGITAL CONVERTERS**

(30) Priority: 27.07.2022 US 202217815440
(71) Applicant: STMicroelectronics (Research & Development) Limited, Marlow SL7 1EY (GB)
(72) Inventor: DUTTON, Neale, EDINBURGH, EH10 6HA (GB)
(74) Representative: Cabinet Beaumont

(57) **Abstract**

An example method, to determine time of flight for light detection and ranging, includes enabling a time to digital converter; emitting a light pulse after enabling the time to digital converter; initiating a sampling window at a time of emission of the light pulse; using the time to digital converter to determine times of flight for photons detected during the sampling window; initiating a blanking period in response to concluding the sampling window; and disabling the time to digital converter in response to initiation of the blanking period.

## Description

### TECHNICAL FIELD

The present invention relates generally to devices, systems, and methods for power-efficient time to digital conversion.

### BACKGROUND

A time to digital converter (TDC) can work to convert differences in time between two signals received by the TDC into a digital signal. TDCs are used in a wide variety of applications. As application for TDCs become more complex there is a growing need for more power efficient TDCs.

### SUMMARY

A method to determine time of flight for light detection and ranging, where the method includes enabling a time to digital converter; emitting a light pulse after enabling the time to digital converter; initiating a sampling window at a time of emission of the light pulse; using the time to digital converter to determine times of flight for photons detected during the sampling window; initiating a blanking period in response to concluding the sampling window; and disabling the time to digital converter in response to initiation of the blanking period.

A method to determine time of flight for light detection and ranging. The method includes detecting a photon; opening a clock gate in response to detecting the photon; and sampling data using a time to digital converter on a next edge of a clock signal passed by the clock gate after opening the clock gate.

A power-saving time to digital converter system includes a time to digital converter including an input to receive data and a clock input, the time to digital converter being configured to sample data received at the input in response to assertion of a signal received at the clock input; and a gating circuit including an event-detection input configured to receive an event-detection signal and a gating input, where the gating circuit is configured to open and close an output of the gating circuit depending on a gating signal received at the gating input, the gating signal being synchronized with a time period of interest for operating the time to digital converter, and where the output is coupled with the time to digital converter.

### BRIEF DESCRIPTION OF THE DRAWINGS

For a more complete understanding of the present invention, and the advantages thereof, reference is now made to the following descriptions taken in conjunction with the accompanying drawings, in which:
Figure 1 depicts a known LiDAR system;
Figure 2 depicts a power-consumption profile for a TDC for known systems;
Figure 3 depicts timing windows and waveforms for time of flight light detection and ranging in accordance with known systems;
Figure 4 depicts timing windows and waveforms for time of flight light detection and ranging in accordance with an embodiment;
Figure 5 depicts a power-efficient ToF LiDAR system in accordance with embodiments;
Figure 6 depicts a synchronous TDC in accordance with embodiments;
Figure 7 depicts a synchronous TDC in accordance with embodiments;
Figure 8 depicts an output stream of a synchronous TDC of embodiments;
Figure 9 depicts an asynchronous TDC in accordance with embodiments;
Figure 10 depicts an asynchronous TDC in accordance with embodiments;
Figure 11 depicts an asynchronous TDC coupled with a circuit to synchronize output of the asynchronous TDC in accordance with embodiments;
Figure 12 depicts a power-efficient LiDAR system comprising a synchronous TDC in accordance with embodiments;
Figure 13 depicts a power-efficient LiDAR system comprising an asynchronous TDC in accordance with embodiments;
Figure 14 depicts clock and SPAD event waveforms;
Figure 15 depicts an event-driven system for a synchronous TDC in accordance with embodiments;
Figure 16 depicts an event-driven system for an asynchronous TDC in accordance with embodiments;
Figure 17 depicts event-driven gating logic in accordance with embodiments;
Figure 18 depicts a power efficient TDC system and event-driven gating logic in accordance with embodiments;
Figure 19 depicts a method for event-driven clock gating in accordance with embodiments;
Figure 20 depicts a power-efficient ToF LiDAR system in accordance with embodiments;
Figure 21 depicts a power-efficient ToF LiDAR system in accordance with embodiments;
Figure 22 depicts a power-saving TDC system in accordance with embodiments;
Figure 23 depicts a power-saving TDC system in accordance with embodiments;
Figure 24 depict a flow chart for a method in accordance with embodiments; and
Figure 25 depict a flow chart for a method in accordance with embodiments.

### DETAILED DESCRIPTION OF ILLUSTRATIVE EMBODIMENTS

TDCs may be used to determine a time difference between two signals. The signals themselves may be triggered by some type of event. The TDC can output a digital code that reflects the difference in time between a stop event and a start event.

TDCs are utilized in a variety of different applications. Light Detection and Ranging (LiDAR) provides one example. In time of flight (ToF) ranging light is emitted from a known light source into an environment. Photons reflected off objects in the environment are then detected by the LiDAR system. Using the speed of light and time difference between emission and detection of light, the distance may be calculated between a LiDAR system and an object in the environment reflecting light. A TDC is used to convert the time difference between a start event (light emission in the case of a LiDAR system) and a stop event (light detection by the LiDAR system).

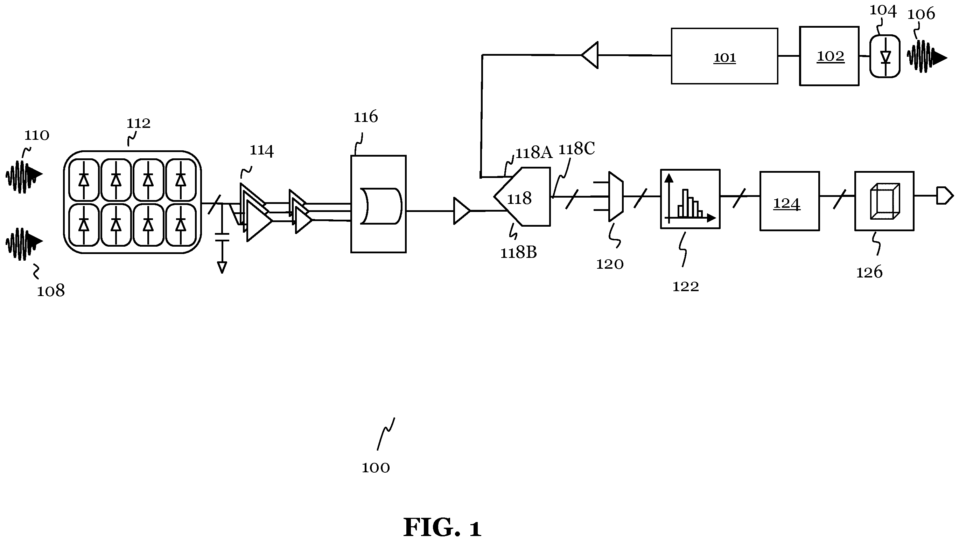

Figure 1 depicts a known LiDAR system.

The known LiDAR system in Figure 1 includes a laser driver 102. The laser driver 102 drives a laser to emit a light pulse 106 from a light source 104. Photons from the light pulse 106 reflect off objects and bounce back to the system 100. A receiver 112 is used to detect reflected light photons from light pulse 108. Ambient light is also detected 110. A resistor may be coupled with the diode to form a recharge device that is coupled to a front-end buffer 114. The front-end buffer 114 resolves the SPAD avalanche pulse (a triangular pulse) into a square digital logic pulse. A pulse combining logic circuit 116 is used to combine signals.

The laser driver 102 provides a signal to a clock generator 101, which provides a clock signal to a TDC 118. The clock is used as the initial frame of reference for counting the time difference between emission of light and reception of reflected light. This clock signal is provided to an input 118A of the TDC 118. An event-detection signal is provided to an input 118B of the TDC. The TDC converts the time difference between the emission of the light pulse 106 and detection of the reflected light pulse 108 into a digital signal that is provided to an output 118C. The output 118C from the TDC 118 is provided to a data aggregation circuit 120. A memory 122 is used to store data into an appropriate bin. Each bin corresponds to a time, and by virtue of the relationship between speed and time, a distance. Photon-detection events are aggregated in memory 122 over a set of samples to build a histogram of photon-event data. A digital signal processor 124 processes the histogram data to extract range data and produce a 3D depth map or point cloud 126.

The TDC 118 uses a significant amount of power. Further, more TDCs may be used as systems become more complex, which makes power-saving systems, devices, and methods for TDCs increasingly important. For example, the resolution demands for LiDAR imaging continues to grow higher and higher. The more TDCs used to meet increased resolution demands, the more impact the TDCs can have on power efficiency of a system.

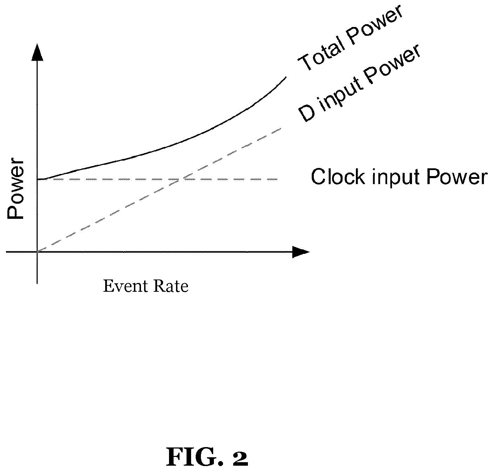

Figure 2 depicts a power-consumption profile for a TDC for known systems.

The total power consumption of a TDC may be driven by the power used by clock input power used to track time differences between signals, and power used for internal switching in response to incoming events (such as incoming photon-detection events). Both the clock input power consumption, and data input power consumption are correlated to the switching of the relevant signals. Clock switching is continuous so the power-consumption curve for clock input power does not vary as a function of the data input. Input power consumption for data (D input power) will vary depending on rate of data-event detection. The resulting total power thus is non-linear with respect the rate of data-event detection because power consumption for clocking is continuous an independent of the rate of data-event detection. The resulting power profile may be problematic because too much power is consumed, and because power consumption is not linear, e.g., power consumption is sub-optimal in certain use cases such as when there are few events. More efficient power consumption for TDCs and more linear power consumption profiles for TDCs would be advantageous for LiDAR systems and other applications as it would provide power savings in nearly all different type of use cases.

Greater power efficiency for a TDC may be realized by coordinating operation of the TDC with other aspects of a system. A TDC may be disabled outside of useful operating windows to save power that would otherwise be consumed due to the clock signal switching. For example, a TDC utilized in a ToF LiDAR system may be disabled outside time windows for photon detection. Operation of a TDC may be limited to time regions of interest to conserve power (such as a sampling window for LiDAR applications).

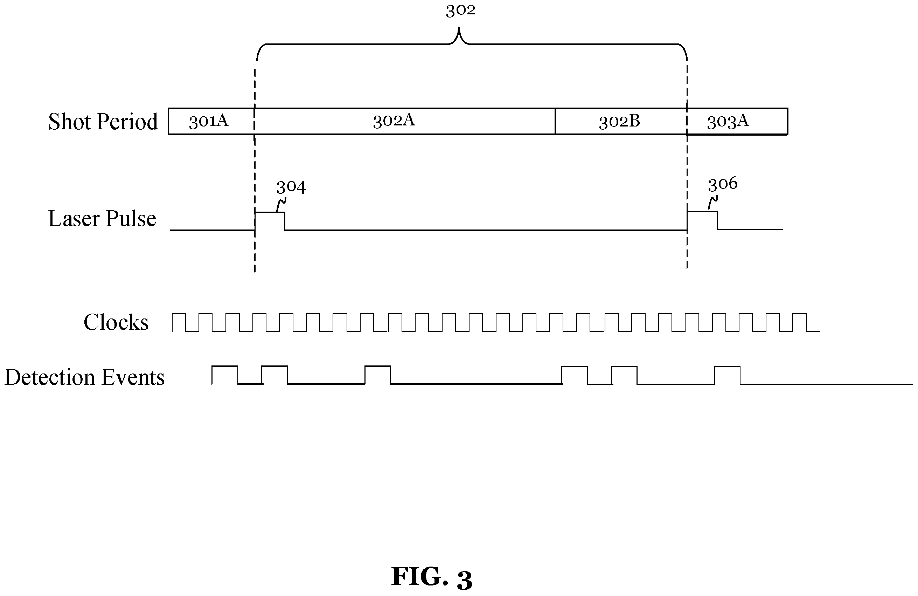

Figure 3 depicts timing windows and waveforms for time of flight light detection and ranging for a known system.

During the integration time of ToF LiDAR ranging, a series of pulses may be utilized to sample an environment. Reflected photons are detected and the results are accumulated to build a histogram of data. A shot period 302 may be initiated with a laser pulse 304. The shot period 302 may comprise a sampling window 302A and a blanking period 302B. The blanking period 302B separates the sampling window 302A from a subsequent laser pulse 306 for the next shot period. Photons are only counted during the sampling window 302A of the shot period. The sampling window may thus represent a time period of interest for operating a TDC. Clock pulses received by a TDC during the blanking period 302B cause needless power consumption by a TDC. Similarly, photon detection events received during a blanking period 302B also cause needless power consumption because photon events detected during the blanking period 302B are not counted for generating a histogram. Coordinating the TDC operation with the blanking period of a ToF system allows greater power-efficiency. Blanking periods can separate each laser pulse so there is a substantial power-saving opportunity. For example, a blanking period 301B may separate the shot period 302 from a previous shot window. The blanking period 302B may separate the shot period 302 from a sampling window 303A of a subsequent shot period.

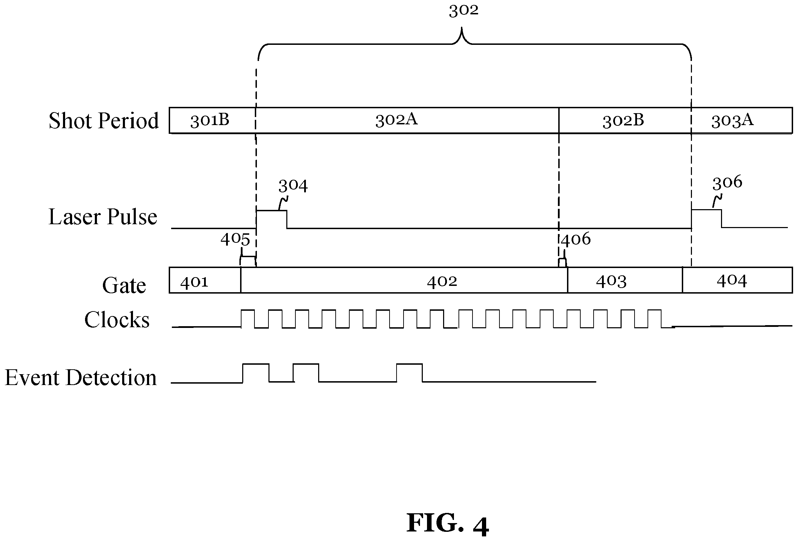

Figure 4 depicts timing windows and waveforms for time of flight light detection and ranging in accordance with an embodiment.

In various embodiments, the clock signal, the event detection signal, or both may be enabled or disabled in coordination with the shot period. For example, the clock signal, the event detection signal or both may be gated to block the signals from passing through the gate during desired periods. In various embodiments, the clock signal, the event detection signal, or both may be gated OFF during blanking periods (such as blanking period 301B and 302B) and gated ON during sampling windows (such as 302A). As will be appreciated, it may be desirable to gate ON the clock signal, the event detection signal, or both before the time sampling window begins. In addition, it may be advantageous to continue to gate ON the clock signal, the event detection signal, or both after the time sampling window ends.

For example, both the clock signal and the event detection signal may be gated OFF during the disabled period 401. This may allow the TDC to save power by eliminating unnecessary switching during the disabled period 401. During an enabled period 402, the clock signal and event detection signal may be gated ON. In the context of a ToF System, photon detection and counting may occur during the sampling window 302A. A buffer period 405 may be incorporated to ensure that the TDC is operational as soon as the sampling window begins. In other words, the clock signal and event detection signal may be gated ON before the sampling window 302A begins. This may be advantageous to account for propagation or other delays. Similarly, the enabled period 402 may extend beyond the sampling window 302A by another buffer period 406. The clock signal and event detection signal may, thus, remain gated ON after the end of the sampling window 302A to ensure the TDC remains operations for the full sampling window.

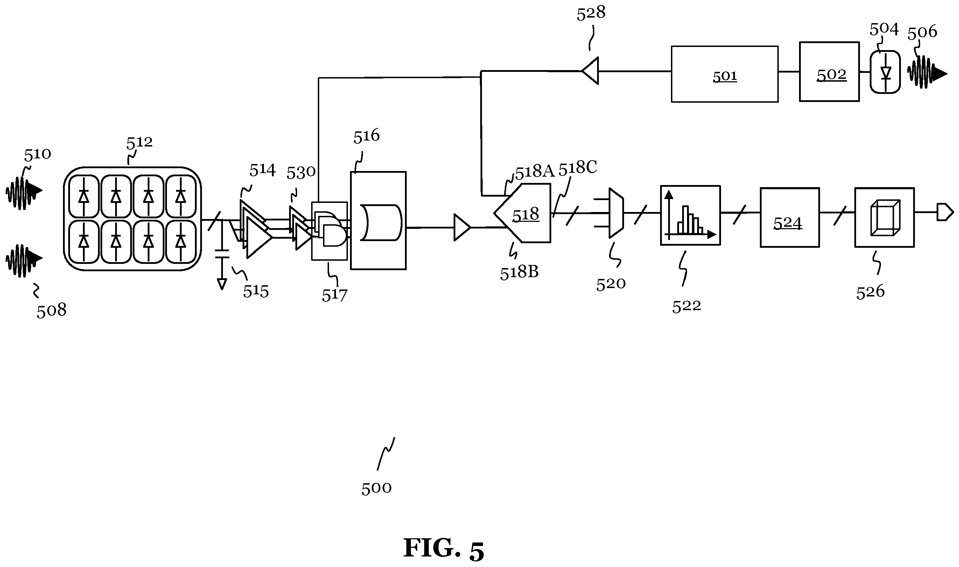

Figure 5 depicts a power-efficient ToF LiDAR system in accordance with embodiments.

A power-efficient LiDAR system 500 may include a laser driver 502. The laser driver 502 may drive a laser 504 to emit a light pulse 506. The laser driver 502 may emit a series of pulses. Light pulses may be followed by a blanking period. Blanking periods may allow signal interference mitigation. For example, dithering and time modulation may occur during blanking periods. Sampling windows for photon counting may be begin in response to the emission of a light pulses. The blanking period may begin at the conclusion of a sampling window. For example, referring to Figure 4, laser pulse 304 may occur with the beginning of sampling window 302A. The sampling window 302A may be followed by the blanking period 302B. A subsequent laser pulse 306 may occur with the beginning of another sampling window 303A.

Photons from the light pulse 506 may reflect of objects in an environment and bounce back to the system 100. An optical receiver 512 may be used to detect reflected light photons of the reflected light pulse 508. Ambient light may also be detected 510. As will be appreciated, the optical receiver may comprise different forms in various embodiments. For example, a single photon avalanche diode (SPAD) may be used to detect photons. In various embodiments, each pixel of a LiDAR system may comprise a SPAD or an array of SPADs. A photon-event detection signal may be produced by the SPAD in response to photon detection. In various embodiments, a single pixel may comprise more than one SPAD. In various embodiments, a single pixel may comprise an array of SPADs with signals combined by an OR tree or other circuit. As will be appreciated, any photon detected by any SPAD of a pixel may be counted as a photon event for that pixel. The optical receiver 512 may be coupled through a recharging device, e.g., a resistor, to the front-end recharging buffer 514, which can amplify a signal from a detection event. Capacitor 515 represents parasitic capacitance.

A pulse-combining logic circuit 516 may be used to combine signals from the optical receiver 512. In various embodiments, the pulse-combining logic circuit 516 may be used to combine photon-detection event signals from multiple SPADs into a signal or a single output. In various embodiments, the pulse-combining logic circuit 516 comprise an OR tree. For example, an optical receiver 512 for a single pixel may comprise multiple SPADs whose outputs are combined into a single signal that is asserted any time any one of the SPADs of the pixel detects a photon.

In various embodiments, a power-efficient LiDAR system 500 may comprise a gating circuit 517. The gating circuit may be in communication with a clock generator 501 that is initialized upon emission of a light pulse. The gating circuit may receive a gating signal that determines when to block or pass data. The clock generator may comprise a phase lock loop or other circuit. The laser driver 502 may be in communication with the clock generator to initialize the clock. In various embodiments, the gating circuit 517 may be in communication with a controller or other component to receive a gating signal, which synchronizes the gating with blanking periods.

The gating circuit 517 may block photon-event detection signals from reaching a TDC 518 during all or part of one ore more blanking periods. For example, the gating circuit may be gated to pass photon-event detection signals during enabled period 402 (referring to Figure 4) and enabled period 404. The gating circuit 517 may block a photon event detection signal during disabled period 401 and disabled period 403. The gating circuit 517 may include logic to decode the clock so that it is gated ON and OFF at appropriate times. In certain embodiments, there is no decoding as the clock signal is changed to a simple gating window signal. The gating circuit 517 may comprise AND gates. The number of AND gates may correspond to the number of SPADs of a pixel. It will be appreciated that the gating circuit may be implemented using other logic and circuity. In various embodiments, the gating circuit 517 may comprise decoding logic to decode a clock signal to determine when to open or close the gating circuit 517. In various embodiments, the gating circuit 517 may received a signal already decoded.

The location of gating circuit 517 may also vary in various embodiments. It will be appreciated that the gating circuit may be disposed at different locations and function to block photon-event detection signals (or signal). In various embodiments, the gating circuit may also block clock signals from reaching the TDC 518 during some part of, or all of, one or more blanking periods.

The clock generator 501 may provide signal to a TDC 518, which may be used to signal the initiation of the sampling window and emission of a light pulse. This may be used to encode the time difference between emission of light and reception of reflected light this is signaled by photon detection events from the optical receiver 512. In various embodiments, the clock generator may provide a timestamp to the TDC that reflects a count, or time elapsed, since emission of a light pulse. The clock generator 501 may be coupled with an input 518A of the TDC 518. An event-detection signal may be provided to an input 518B of the TDC 518. The TDC may convert the time difference between the emission of the light pulse 506 and detection of the reflected light pulse 508 into a digital signal that is provided to an output 518C.

The input 518B may be paired with an event signal that indicates when to stop timing performed by the TDC 518. For example, using LiDAR systems as an example, the input 518B may be coupled it a photon-detection event signal. The input 518A may comprise a clock input and it may receive a clock signal.

Optionally, the output 518C from the TDC 118 may be provided to a data aggregation circuit 520. A memory 522 may be used to store data into an appropriate bin. Each bin may correspond to a time, and by virtue of the relationship between speed and time, a distance. For example, a histogram may comprise 64 bins, each bin corresponding to a time range relative to emission of a light pulse. Together, the ranges of the 64 bins may sum to equal the time range of a sampling window. Photon-detection events are allocated to the appropriate bin depending on when they are detected within a sampling window. As will be appreciated, the length of the sampling window may vary in various embodiments. The number of bins may also vary. Results may be aggregated in memory over a set of samples to build a histogram of photon-event data. Each sample may correspond to a light pulse and shot period. A digital signal processor 524 may process the histogram data to extract range data and produce a 3D depth map or point cloud 526. In various embodiments, power-efficient LiDAR system 500 may comprise a buffer circuit 528 and buffer circuit 530.

In various embodiments, TDC 518 may comprise a synchronous TDC. A synchronous TDC, which may be referred to as a clock driven TDC, may sample data on a subsequent clock edge after an event occurs. For example, in the context of a LiDAR system, a clock-driven TDC may receive a photon-detection event. And, on a following edge of a clock signal (rising or falling in various embodiments), a flip flop of the TDC 518 may be latched to sample input data. Then, depending on the time when the data is sampled relative to a light pulse, a bin of a histogram may be incremented.

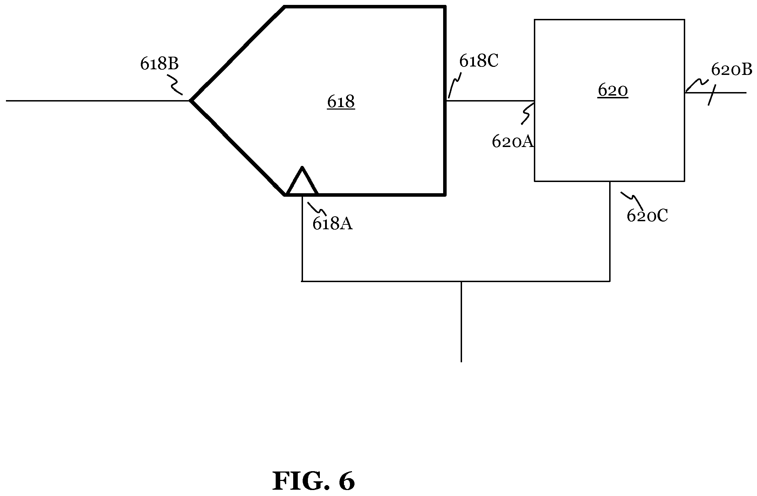

Figure 6 depicts a synchronous TDC in accordance with embodiments.

The TDC 518 may comprise a synchronous TDC 618. The synchronous TDC 618 may comprise a clock input 618A, an input 618B and an output 618C. The clock input 618A may be coupled with the clock generator to receive a clock signal. The input 618B may be receive an event detection signal (a data signal). For example, the input 618B may receive the photon event detection signal. Output data indicative of a time differential may be provided to the output 618C.

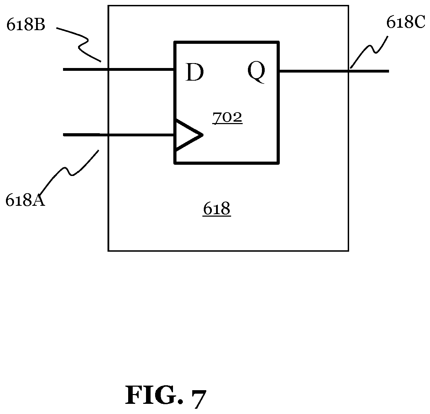

Figure 7 depicts a synchronous TDC in accordance with embodiments.

In various embodiments, the synchronous TDC 618 may comprise a flip flop 702. The data input for the flip flop may receive the event-detection data (for example photon-event detection). In addition, the clock input of the flip flop 702 may receive the clock signal. The output of the flip flop 702 may be provided to the output 618C. As will be appreciated, once data input is asserted, the flip flop 702 may latch on a subsequent edge of clock signal. As will be appreciated, this may be the next rising edge or the next falling edge in various embodiments. The output of the flip flop 702, and thus the synchronous TDC 618, may be synchronized with the clock signal. Depending on the time relative to the emission of a clock pulse, the output of the synchronous TDC 618 may be allocated to corresponding bin of a histogram. By way of example, output from the synchronous TDC 618 during a first period may be allocated to a first histogram bin. Output during a second period may be allocated to a second bin, and so forth. The length of the periods may be equal to the periods of the clock signal. The output of a synchronous TDC 618 may be unary. For example, changes in an output data stream may trigger accumulation of a bin location for the time period when the output changes.

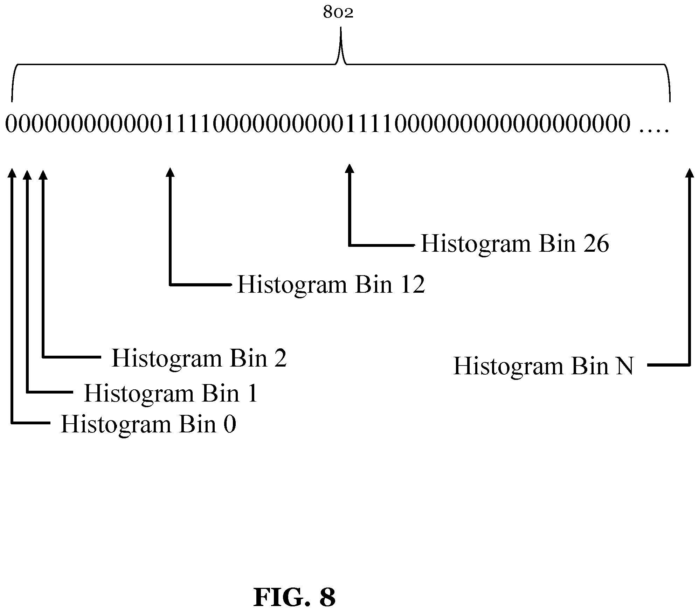

Figure 8 depicts an output data stream of a synchronous TDC of embodiments.

The output stream 802 may comprise N bits. Each bit may correspond to an output of a synchronous TDC 618. The number of bits may also correspond to the number of bins of a histogram for LiDAR applications. For example, a data stream may comprise 128 bits and a histogram may comprise 128 bins. It should be appreciated that the number of bins and bits may vary in various embodiments. The number of outputs may also be equal to the number of clock periods of a sampling window (for example, sampling window 302A of Figure 3).

Each bit of the data stream may be corresponded to a bin of a histogram. For example, a zero bit may be corresponded to a Histogram Bin o, a first bit may be corresponded to a Histogram Bin 2, and an Nth bit may be corresponded to a Histogram Bin N. If a photon detection event is detected during a given time period, the corresponding bit of the output stream may indicate the detection and the memory location of the corresponding histogram bin may be incremented.

The output of the synchronous TDC 618 may be unary encoded. Events may be reflected by changes in the output stream. For example, in various embodiments a histogram may be incremented upon a change from a "0" to a "1" in an output stream. For example, the output stream 802 changes from a "0" to a "1" in the 12^{th} bit and the 26^{th} bit. Using a unary decoding scheme triggered on changes from "0" to "1," the output stream 802 may cause a 12^{th} histogram bin and a 26^{th} histogram bin to be incremented.

Returning to Figure 6, the output 618C is coupled to allocation circuit 620. In various embodiments, the allocation circuit 620 may comprise an input 620A and an output 620B. The allocation circuit 620 may receive an output data stream (such as output stream 802) from the synchronous TDC 618. In addition, the allocation circuit 620 may output data to the appropriate histogram bin depending on the time.

As will be appreciated, in an embodiment, the allocation circuit 620 may simply be the address decoder of a memory. The output of the TDC 618 may connect to the memory address decoder. In one or more embodiments, the allocation circuit 620 may comprise a synchronous high-speed decoder to allocate the data output of the synchronous TDC 618 to the appropriate histogram bin. In various embodiments, the allocation circuit may receive a clock signal at a clock input 620C. This may allow the allocation circuit to be synchronized with the output stream of the synchronous TDC 618. As will be appreciated, the allocation circuit 620 may comprise various forms in various embodiments. In various embodiments, the allocation circuit 620 may receive a count that is initialized at the beginning of a sampling window (such as sampling window 302A) and the allocation circuit may comprise decoding logic to determine where to allocate the output of the allocation circuit 620. In various embodiments, the allocation circuit may cycle through possible outputs one by one synchronously with data output stream of the synchronous TDC 618. In various embodiments, the allocation circuit 620 may comprise a synchronous decoder. In various embodiments, the allocation circuit 620 may comprise dedicated data logic to allocate the data to an appropriate bin.

In various embodiments, TDC 518 may comprise an asynchronous TDC. An asynchronous TDC, which may be referred to as an event-driven TDC, may sample a clock count any time a detection event is detected.

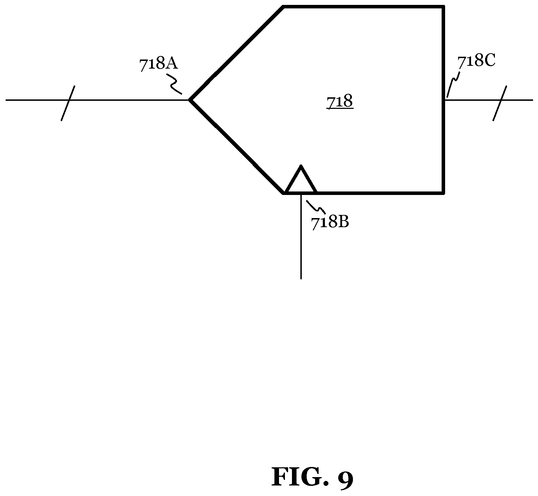

Figure 9 depicts an asynchronous TDC in accordance with embodiments.

An asynchronous TDC 718 may comprise in input 718A, an input 718B and an output 718C. An asynchronous TDC 718 may receive a clock signal or timestamp at input 718A. For example, the input 718A may be coupled with the clock generator 501. Input 718B may comprise a clock input for the asynchronous TDC 718. The input 718B may be coupled with an event detection signal (for example the photon-event detection signal). An asynchronous TDC 718 may sample the input at input 718A when the event signal is asserted. The input 718A may be a multibit input. Output 718C may be a multibit output.

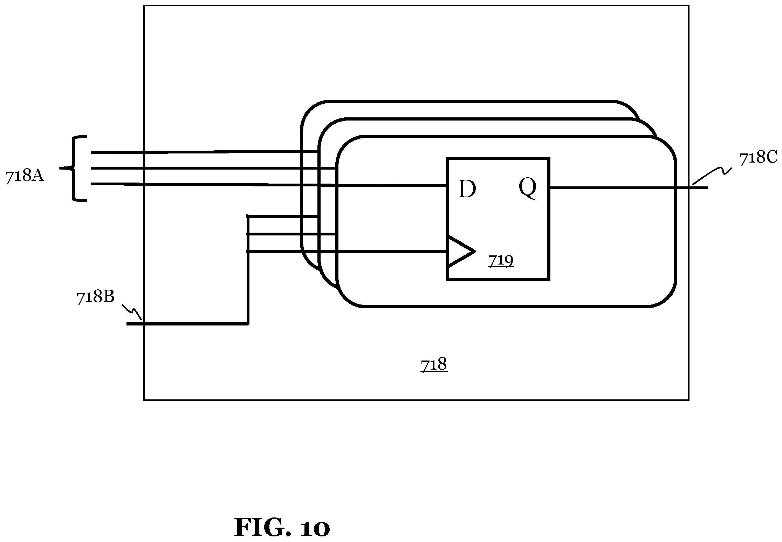

Figure 10 depicts an asynchronous TDC in accordance with embodiments.

An asynchronous TDC 718 may comprise one or more flip flops. The number of flip flops may correspond to the number of bits of input carried on input 718A. A first bit of a clock signal or timestamp received at asynchronous TDC 718 may be provided to a data input of a first flip flop 719. A second bit of a clock signal or timestamp received at asynchronous TDC 718 may be provided to a data input of a second flip flop. An Nth bit of a clock signal or timestamp received at asynchronous TDC 718 may be provided to a data input of an Nth flip flop 719. The number of flip flops may be determined by the data being sampled. For example, the number of flip flop may allow a data signal to indicate which bin to allocate data of a histogram. For example, an asynchronous TDC 718 may comprise six flip flop for receiving time data for a 64 bin histogram. An asynchronous TDC 718 may comprise seven flip flops for receiving time data for a 128 bin histogram.

The clock input for the flip flop 719 may be coupled with the asynchronous TDC 718 to receive the event signal. The clock inputs of additional flip flops of the asynchronous TDC 718 may also receive the event signal via the input 718B. As will be appreciated this may allow the asynchronous TDC 718 to sample the time data received at input 718A when the signal received at input 718B is asserted. In various embodiments, a time code signal received at input 718A may comprise a code, such as a time stamp, that indicates the time elapsed since emission of a light pulse. The clock generator 501 may initialize a count when the laser driver 502 drives a light pulse emission. The count of the time code signal may increment until a photon event is detected by optical receiver 512, which may trigger the asynchronous TDC to store the time code signal or timestamp received by the asynchronous TDC at the time of the photon event. This value may be provided to output 718C and it then may be used to determine which bin of a histogram to increment. For example, a six-bit time code signal may be used correspond a value "000000" to a 0^{th} bin of a histogram, a value "000001" to a 1^{st} bin of histogram, and a value "0000010" to a 2^{nd} bin of a histogram and so forth. The time code signal value may serve as a time stamp for the event detection. The counter of the time code signal may be reset for each sampling period.

In various embodiments, the output of the asynchronous TDC may be paired with a circuit to synchronize the asynchronous TDC with a system clock.

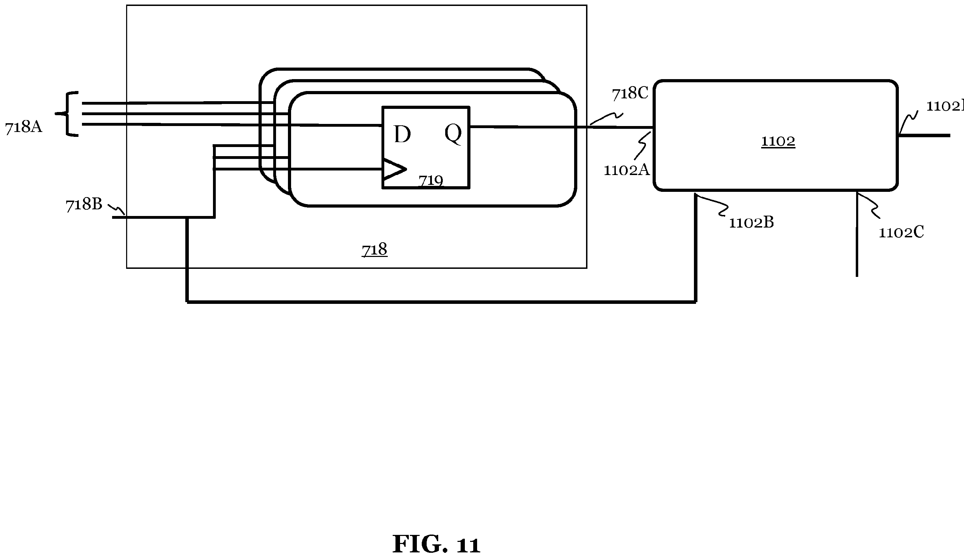

Figure 11 depicts an asynchronous TDC coupled with a circuit to synchronize output of the asynchronous TDC in accordance with embodiments.

In various embodiments, the output 718C of the asynchronous TDC 718 may be coupled with a synchronization circuit 1102. In various embodiments, the synchronization circuit 1102 may comprise a write-data input 1102A, a write-data clock input 1102B, a read-data output 1102D, and a read-data clock input 1102C. The output 718C may be coupled with the write-data input 1102A. The write-data clock input 1102B may be coupled with the event detection signal. The read-data clock input 1102C may be coupled with a system clock. The synchronization circuit 1102 may read data received at the write-data input 1102A when the event signal is asserted. Each time the event signal is asserted, data output by the asynchronous TDC 718 may be read. In addition, on a subsequent system clock pulse the data may be provided to the read-data output 1102D. The system clock coupled with the read-data clock input 1102C may be provided by the clock generator 501 in various embodiments. In various embodiments, the synchronization circuit 1102 may comprise a First In First Out (FIFO) circuit.

A power-efficient LiDAR system 500 may be implemented with a synchronous TDC 618 or an asynchronous TDC 718.

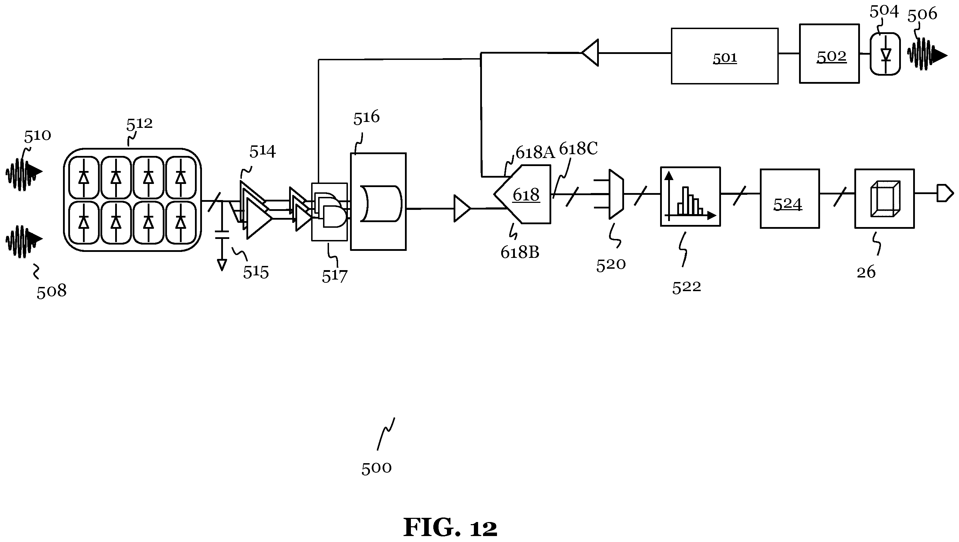

Figure 12 depicts a power-efficient LiDAR system comprising a synchronous TDC in accordance with embodiments.

The synchronous TDC 618 of the power-efficient LiDAR system 500 of Figure 12 is coupled at input 618B with the photon event detection signal triggered by the optical receiver 512. The clock input 618A of the synchronous TDC 618 is coupled with a clock signal received from the clock generator 501. As will be appreciated, the power-efficient LiDAR system 500 may also comprise an allocation circuit 620 (not depicted in Figure 12).

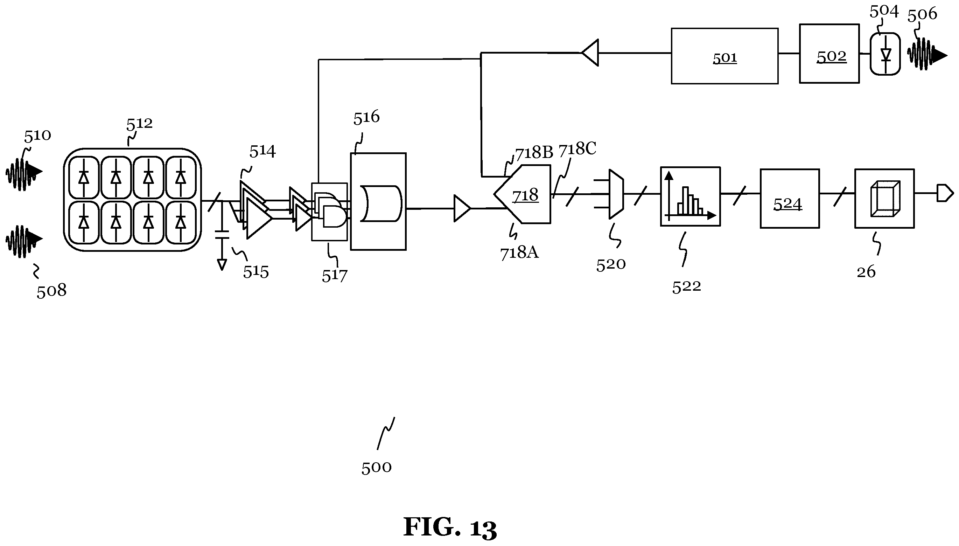

Figure 13 depicts a power-efficient LiDAR system comprising an asynchronous TDC in accordance with embodiments.

The asynchronous TDC 718 of the power-efficient LiDAR system 500 of Figure 13 is coupled at input 718A with the photon event detection signal triggered by the optical receiver 512. The input 718B (clock input) of the asynchronous TDC 718 is coupled with a clock signal or timestamp received from the clock generator 501. As will be appreciated, the power-efficient LiDAR system 500 may also comprise a synchronization circuit 1102 (not depicted in Figure 13).

Power efficiencies may also be realized by coordinating a clock signal with an event. An event-driven clock signal may reduce unneeded switching and other operations of a TDC.

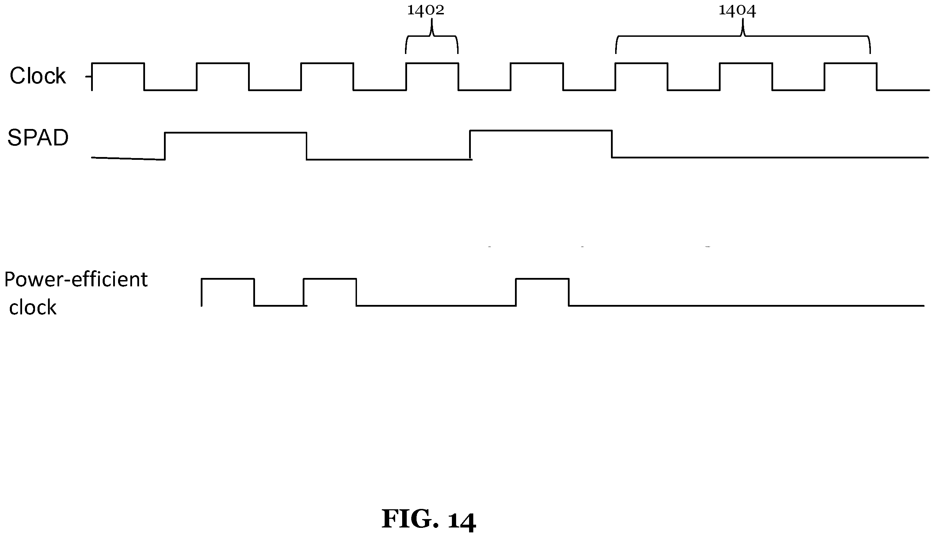

Figure 14 depicts clock and SPAD event waveforms.

In various systems and embodiments, a TDC may sample data only in response to an event occurrence. For example in LiDAR systems, sampling may occur in response to photon-event detection. A continuous clock may cause unnecessary power expenditures. As seen in Figure 14, clock periods 1402 and 1404 from the "Clock" waveform may be removed. Power-efficiencies may be improved by removing these periods of pulses from the clock signal provided to a TDC. Further, this may make the power-consumption more linearly related between power expenditure of the TDC and the number events detected. It should be appreciated that the power-efficient clock signal may determine when a TDC receives a clock signal. A clock may continue to increment (for an asynchronous TDC) so that an appropriate time stamp is received. In addition, in for synchronous TDCs, a continuous clock signal may be provided to other components such as allocation circuit 620 even if it is not received by the TDC.

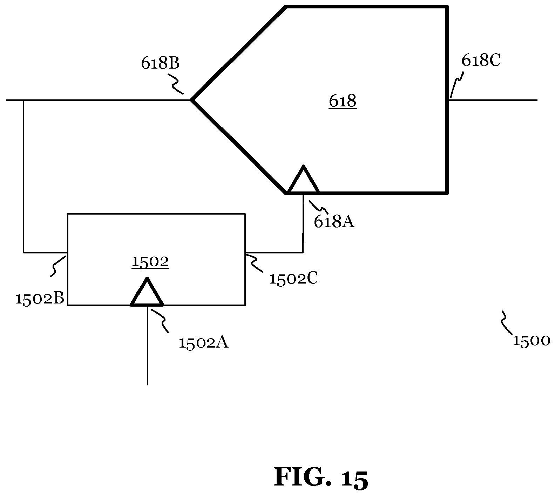

Figure 15 depicts an event-driven system for a synchronous TDC in accordance with embodiments.

An event-driven system for a synchronous TDC 1500 may comprise a synchronous TDC 618 and event-driven gating logic 1502. In various embodiments, the event-driven gating logic 1502 may receive a clock signal at a clock input 1502A. The event-driven gating logic 1502 may receive an event signal at an input 1502B. The event signal may comprise, for example, a photon-detection event signal. The event-driven gating logic 1502 may comprise an output 1502C that is coupled with clock input 618A of the synchronous TDC 618.

The event-driven gating logic 1502 may block the clock signal received at the clock input 1502A unless the event-signal received at the event-signal input is also asserted. This may prevent the synchronous TDC 618 from sampling data provided to input 618B unless an event has occurred thus increasing the efficiency of the operation of a TDC.

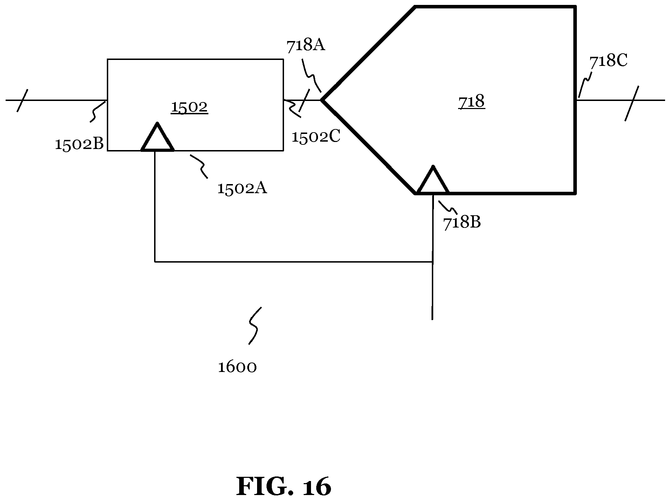

Figure 16 depicts an event-driven system for an asynchronous TDC in accordance with embodiments.

An event-driven system for an asynchronous TDC 1600 may comprise an asynchronous TDC 718 and event-driven gating logic 1502. In various embodiments, the event-driven gating logic 1502 may receive a clock signal (timestamp) at an input 1502B. The event-driven gating logic 1502 may receive an event signal at clock input 1502A. The event signal may comprise, for example, a photon-detection event signal. The event-driven gating logic 1502 may comprise an output 1502C that is coupled with input 718A of the asynchronous TDC 718.

The event-driven gating logic 1502 may block the clock signal from reaching the input 718A unless an event has been detected. This may allow more efficient operation of the asynchronous TDC 718 because the input received at asynchronous TDC 718 may change in coordination with an event rather than continuously. As will be appreciated, the clock signal received provided to the clock input 1502A may comprise a code (timestamp) that reflects time elapsed since an event has occurred. For example, the clock signal provided to the event-driven gating logic 1602 may comprise a timestamp since emission of a light pulse that is only provided to the asynchronous TDC 718 when a photon-detection event occurs due to operation of the event-driven gating logic 1502.

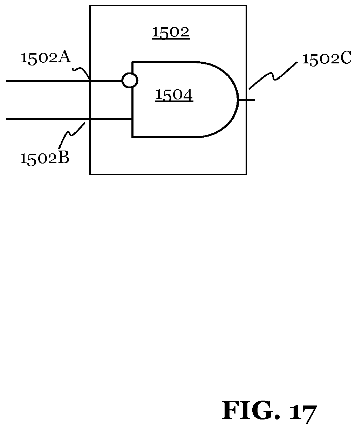

Figure 17 depicts event-driven gating logic in accordance with embodiments.

The event-driven gating logic 1502 may comprise a clock input 1502A and an input 1502B. The event-driven gating logic 1502 may comprise an AND gate 1504 in various embodiments. It may be advantageous to use an AND gate to have no switching dynamic consumption or shoot-through current when no events are occurring. Other logic gates may be utilized in other embodiments, such as, but not limited to NAND gates. In various embodiments, a signal received at the clock input 1502A may be inverted to allow a negative cycle clock gate. In various embodiments, the clock signal may, or may not be inverted before being provided to AND gate 1504. In various embodiments, the event-driven gating logic 1520, may comprise a plurality of AND gates. Each AND gate may receive a respective bit of a data code (such as a timestamp beginning with light-pulse emission). All AND gates may receive the event signal. This may allow each bit to be passed when an event occurs. It should be appreciated that the output 1502C may comprise a multi-bit output.

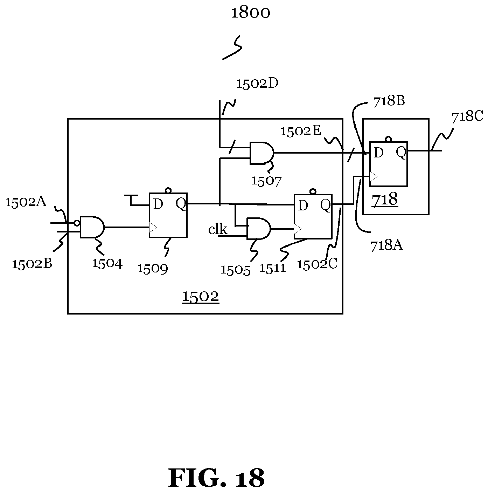

Figure 18 depicts a power efficient TDC system and event-driven gating logic in accordance with embodiment.

A power-efficient TDC system 1800 may comprise an event-driven gating logic 1502. The event-driven gating logic 1502 in the power-efficient TDC system may comprise any embodiment of an event-driven gating logic 1502. In various embodiments, the event-driven gating logic 1502 may comprise a data input 1502D. The data input may carry a timestamp code. The event-driven gating logic 1502 may comprise a data output 1502E. The data output 1502E may be coupled with input 718B of a asynchronous TDC 718 and the output 1502C may be coupled with input 718A of a asynchronous TDC 718.

The event-driven gating logic 1502 may comprise an AND gate 1504. The event-driven gating logic may also be referred to as a clock gate. The event-driven gating logic 1502 may further comprise an AND gate 1505, AND gate 1507, flip flop 1509, and flip flop 1511. The event-driven gating logic 1502 may receive a clock signal at clock input 1502A. An event signal may be received at event-driven gating logic 1502. Both the event signal and clock signal may be provided to AND gate 1504. As will be appreciated, gate 1504 may pass the negative clock cycle of the clock signal when the event signal is asserted. Flip Flop 1509 may then latch the output of the flip flop 1509. This may open AND gate 1505, which may also receive the clock signal received from clock input 1502A. The clock signal may then pass to the flip flop 1511, which will latch on the positive edge of the clock signal. AND gate 1507 may be opened when flip flop 1509 is asserted. AND gate 1507 may also receive a bit of a timestamp provided to data input 1502D. As will be appreciated, additional bits of the timestamp may be provided to additional AND gates opened, like AND gate 1507, by the output of flip flop 1509. The timestamp will then be passed to data output 1502E and provided to asynchronous TDC 718. As will be appreciated, the asynchronous TDC 718 may comprise a flip flop for each bit of the data signal. The output of flip flop 1511 may be provided to input 718A, which may sample the timestamp when the asynchronous TDC 718 is latched on the positive edge of the clock signal. It should be appreciated that the flip flop 1509 and flip flop 1511 may be reset after an event.

In various embodiments, the power-efficient TDC system 1800 may comprise a synchronous TDC 618 rather than an asynchronous TDC 718. AND gate 1507 may receive the event signal at data input 1502D as a single bit and output a single bit, which may be sampled by the synchronous TDC 618.

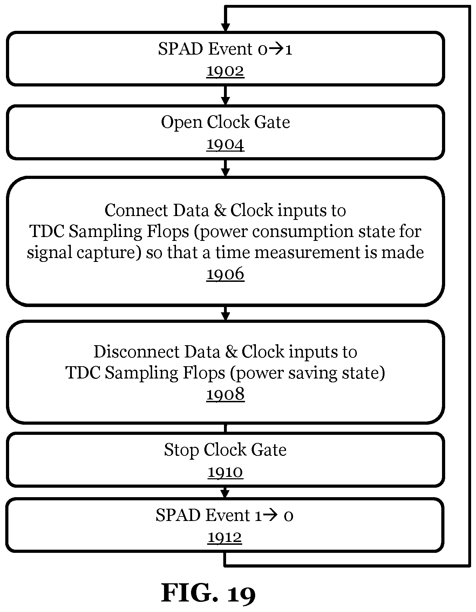

Figure 19 depicts a method for event-driven clock gating in accordance with embodiments.

The method 1900 may comprise at a step 1902 detecting a SPAD event. A SPAD event signal may be asserted. At a step 1904, the method may comprise opening a clock gate, for example, event-driven gating logic 1502. At a step 1906, the method may comprise connecting a data signal and clock signal with flip flop of a TDC. This may allow a timestamp carried on the data signal to be sampled by the TDC. At a step 1908, the data and clock inputs are disconnected from the TDC flip flops. As will be appreciated, the TDC may conserve power when disconnected from the data and clock signals. At a step 1910, the method may comprise closing the clock gate. At a step 1912, the SPAD event signal may return to zero. As will be appreciated, the period for a SPAD event may be greater than the period of the clock signal.

In various embodiments, data may be sampled synchronously with the clock provided to open and close event-driven gating logic 1502. This may allow avoidance of nonlinearity and phase rotation.

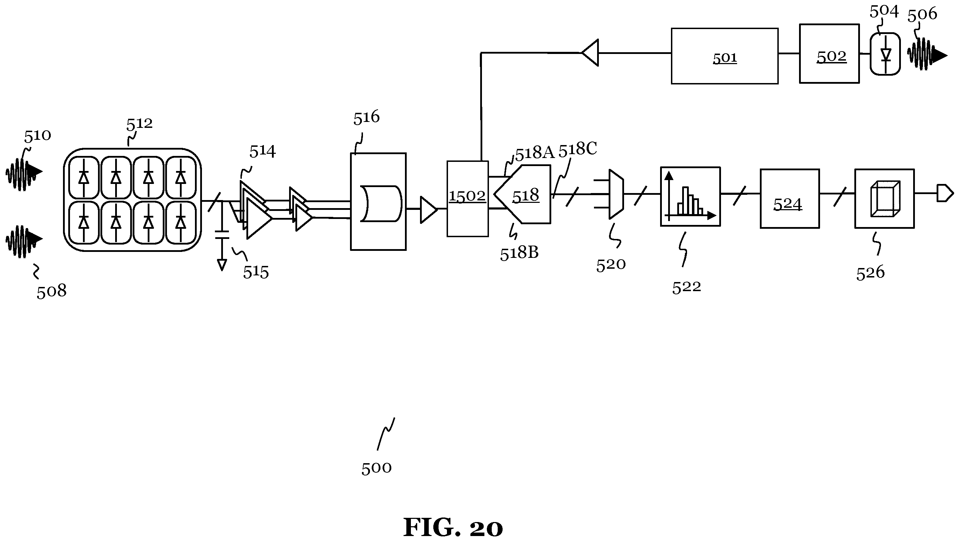

Figure 20 depicts a power-efficient ToF LiDAR system in accordance with embodiments.

In various embodiments, the power-efficient LiDAR system 500 may comprise an event-driven gating logic 1502. As will be appreciated, the configuration of the event-driven gating logic 1502 may vary along with the TDC 518, which may comprise, for non-limiting example, a synchronous TDC, and an asynchronous TDC. Incorporating an event-driven gating logic 1502 into power-efficient LiDAR system 500 may allow the TDC 518 to conserve power by saving unnecessary operations of the TDC 518 when a SPAD event has not occurred.

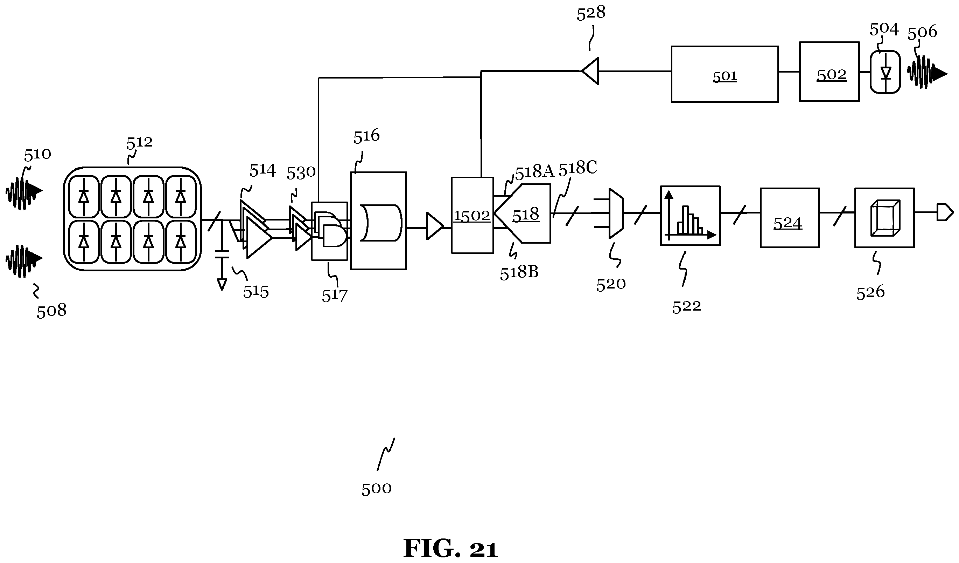

Figure 21 depicts a power-efficient ToF LiDAR system in accordance with embodiments.

In various embodiments, the power-efficient LiDAR system 500 may comprise a gating circuit 517, and event-driven gating logic 1502. This may allow the power-efficient LiDAR system 500 to realize power efficiencies by reducing power consumption during predetermined time periods (like a blanking time period) and realize power efficiencies derived from event driven clocking to sample time data. As will be appreciated, a power-efficient LiDAR system 500 that comprises a gating circuit 517 and event-driven gating logic 1502 may comprise a synchronous TDC. In various embodiments, a power-efficient LiDAR system 500 that comprises a gating circuit 517 and event-driven gating logic 1502 may comprise an asynchronous TDC.

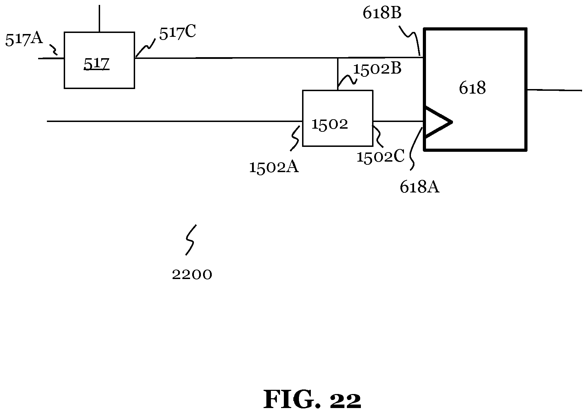

Figure 22 depicts a power-saving TDC system in accordance with embodiments.

A power-saving TDC system 200 may comprise a gating circuit 517, event-driven gating logic 1502, and synchronous TDC 618. Output from output 1502C may be provided to clock input 618A. Output 517C from gating circuit 517 may be provided to input 518B. Input 517A for the gating circuit may comprise an event detection signal (such as a photon-event detection signal). Input 517B to gating circuit 517 may receive a gating signal to indicate when to allow or block the event signal provided to input 517A. Clock input 1502A may receive a clock signal.

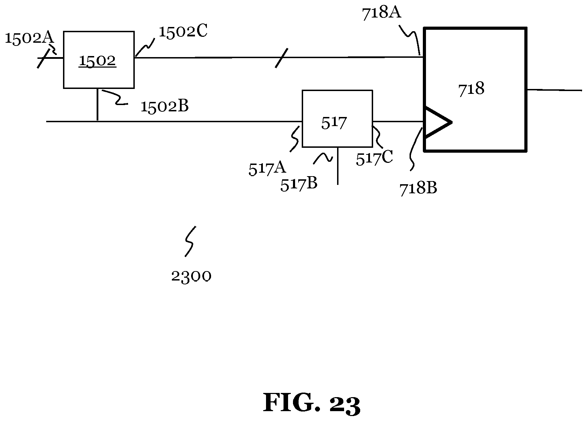

Figure 23 depicts a power-saving TDC system in accordance with embodiments.

In various embodiments, a power-saving TDC system 2300 may comprise an event-driven gating logic 1502, gating circuit 517, and asynchronous TDC 718. The event-driven gating logic 1502 may receive timestamp data at clock input 1502A and an event signal at input 1502B. Output 1502C may be provided to input 718A. The gating circuit 517 may receive an event signal at input 517A, and input 517B to gating circuit 517 may comprise a gating signal to indicate when to allow or block the even signal provided to input 517A. Output 517C of gating circuit 517 may provided to input 718B.

As will be appreciated, the event-driven gating logic 1502 and gating circuit 517 allow reduction of power consumption. Further, total power-consumption is more linearly correlated to the number of events because power consumption from continuous clocking (whether or not an event occurs) may be eliminated or reduced. Further, due to the structure described using Figure 18, embodiments of the present disclosure allow partitioning of a TDC design with relaxed time at boundaries.

In various embodiments, the a power-efficient LiDAR system may be disposed, in part or in full, on a system on a chip, application specific integrated circuit, microcontroller or the like.

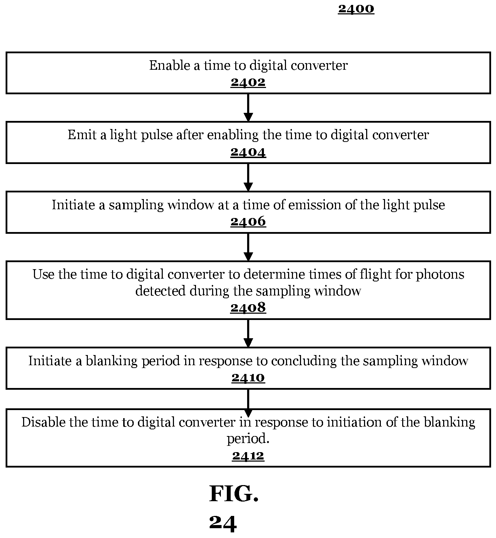

Figure 24 depict a flow chart for a method in accordance with embodiments.

In various embodiments, a method 2400 to determine time of flight for light detection and ranging may comprise at a step 2402, enabling a time to digital converter; at a step 2404, emitting a light pulse after enabling the time to digital converter; at a step 2406, initiating a sampling window at a time of emission of the light pulse; at a step 2408, using the time to digital converter to determine times of flight for photons detected during the sampling window; at a step 2410, initiating a blanking period in response to concluding the sampling window; and, at a step 2412, disabling the time to digital converter in response to initiation of the blanking period.

In various embodiments, the method 2400 may further comprise emitting a subsequent light pulse after an end of the blanking period.

In various embodiments, the method 2400 may further comprise comprising re-enabling operation of the time to digital converter before emission of the subsequent light pulse, initiating a subsequent sampling window at a time of emission of the subsequent light pulse, using the time to digital converter to determine times of flight for photons detected during the subsequent sampling window; initiating a subsequent blanking period after an end of the subsequent sampling window; and disabling the time to digital converter after initiating the subsequent blanking period.

In various embodiments, the method 2400 may further comprise incrementing bins of a histogram depending on times of flight of photons detected during the sampling window.

In various embodiments, the method 2400 may further comprise, wherein using the time to digital converter to determine times of flight for photons detected during the sampling window comprises detecting a photon, opening a clock gate gating a clock input for the time to digital converter in response to detecting the photon, and sampling a time of flight of the photon after opening the clock gate.

In various embodiments, the method 2400 may further comprise, wherein sampling the time of flight of the photon comprises sampling on a negative clock edge after opening the clock gate.

In various embodiments, the method 2400 may further comprise, wherein enabling the time to digital converter comprises enabling a synchronous time to digital converter.

In various embodiments, the method 2400 may further comprise, wherein enabling a time to digital converter comprises enabling a synchronous time to digital converter.

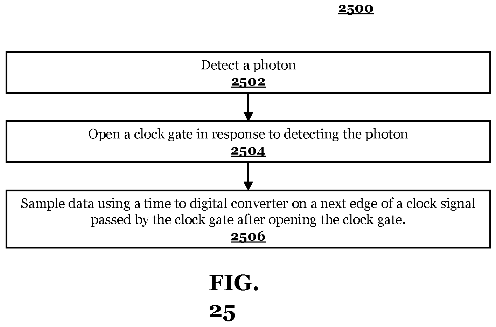

Figure 25 depict a flow chart for a method in accordance with embodiments.

In various embodiments, a method 2500 to determine time of flight for light detection and ranging may comprise, at a step 2502, detecting a photon; at a step 2504, opening a clock gate in response to detecting the photon; and, at a step 2506, sampling data using a time to digital converter on a next edge of a clock signal passed by the clock gate after opening the clock gate.

In various embodiments, a method 2500 may further comprise, wherein the next edge of the clock signal comprises a next falling edge of the clock signal.

In various embodiments, a method 2500 may further comprise further comprising initiating a count beginning with a time of emission of a light pulse and wherein sampling time data using the time to digital converter comprises sampling the count.

In various embodiments, a method 2500 may further comprise, further comprising incrementing a bin of a histogram depending on the data sampled.

In various embodiments, a method 2500 may further comprise, further comprising the time to digital converter; emitting a light pulse after enabling the time to digital converter; initiating a sampling window at a time of emission of the light pulse, the photon being detected during the sampling window; initiating a blanking period in response to concluding the sampling window; and disabling operation of the time to digital converter in response to initiation of the blanking period.

In various embodiments, a method 2500 may further comprise, sampling time data using a time to digital converter comprises using a synchronous time to digital converter to sample tide data.

In various embodiments, a method 2500 may further comprise, sampling time data using a time to digital converter comprises using an asynchronous time to digital converter to sample tide data.

In various embodiments, a method 2500 may further comprise, wherein sampling time data using a time to digital converter comprises sampling a timestamp indicating a time elapsed between emission of a light pulse and detecting the photon.

Example embodiments of the invention are summarized here. Other embodiments can also be understood from the entirety of the specification as well as the claims filed herein.

Example 1. A method to determine time of flight for light detection and ranging, where the method includes enabling a time to digital converter; emitting a light pulse after enabling the time to digital converter; initiating a sampling window at a time of emission of the light pulse; using the time to digital converter to determine times of flight for photons detected during the sampling window; initiating a blanking period in response to concluding the sampling window; and disabling the time to digital converter in response to initiation of the blanking period.

Example 2. The method of example 1, further including emitting a subsequent light pulse after an end of the blanking period.

Example 3. The method of one of examples 1 or 2, further including re-enabling operation of the time to digital converter before emission of the subsequent light pulse, initiating a subsequent sampling window at a time of emission of the subsequent light pulse, using the time to digital converter to determine times of flight for photons detected during the subsequent sampling window; initiating a subsequent blanking period after an end of the subsequent sampling window; and disabling the time to digital converter after initiating the subsequent blanking period.

Example 4. The method of one of examples 1 to 3, further including incrementing bins of a histogram depending on times of flight of photons detected during the sampling window.

Example 5. The method of one of examples 1 to 4, where using the time to digital converter to determine times of flight for photons detected during the sampling window includes detecting a photon, opening a clock gate gating a clock input for the time to digital converter in response to detecting the photon, and sampling a time of flight of the photon after opening the clock gate.

Example 6. The method of one of examples 1 to 5, where sampling the time of flight of the photon includes sampling on a negative clock edge after opening the clock gate.

Example 7. The method of one of examples 1 to 6, where enabling the time to digital converter includes enabling a synchronous time to digital converter.

Example 8. The method of one of examples 1 to 7, where enabling a time to digital converter includes enabling a synchronous time to digital converter.

Example 9. A method to determine time of flight for light detection and ranging. The method includes detecting a photon; opening a clock gate in response to detecting the photon; and sampling data using a time to digital converter on a next edge of a clock signal passed by the clock gate after opening the clock gate.

Example 10. The method of example 9, where the next edge of the clock signal includes a next falling edge of the clock signal.

Example 11. The method of one of examples 9 or 10, further including initiating a count beginning with a time of emission of a light pulse and where sampling time data using the time to digital converter includes sampling the count.

Example 12. The method of one of examples 9 to 11, further including incrementing a bin of a histogram depending on the data sampled.

Example 13. The method of one of examples 9 to 12, further including the time to digital converter; emitting a light pulse after enabling the time to digital converter; initiating a sampling window at a time of emission of the light pulse, the photon being detected during the sampling window; initiating a blanking period in response to concluding the sampling window; and disabling operation of the time to digital converter in response to initiation of the blanking period.

Example 14. The method of one of examples 9 to 13, sampling time data using a time to digital converter includes using a synchronous time to digital converter to sample tide data.

Example 15. The method of one of examples 9 to 14, sampling time data using a time to digital converter includes using an asynchronous time to digital converter to sample tide data.

Example 16. The method of one of examples 9 to 15, where sampling time data using a time to digital converter includes sampling a timestamp indicating a time elapsed between emission of a light pulse and detecting the photon.

Example 17. A power-saving time to digital converter system includes a time to digital converter including an input to receive data and a clock input, the time to digital converter being configured to sample data received at the input in response to assertion of a signal received at the clock input; and a gating circuit including an event-detection input configured to receive an event-detection signal and a gating input, where the gating circuit is configured to open and close an output of the gating circuit depending on a gating signal received at the gating input, the gating signal being synchronized with a time period of interest for operating the time to digital converter, and where the output is coupled with the time to digital converter.

Example 18. The system of example 17, further including an event-driven gating logic circuit including an event-detection input configured to receive an event detection signal, a data input configured to receive a data signal, and an output coupled with time to digital converter, and where the event-driven gating logic circuit is configured to open its output in response to asserting the event-detection signal.

Example 19. The system of one of examples 17 or 18, where the time to digital converter includes a synchronous time to digital converter, the output of the gating circuit is coupled with the data input of the time to digital converter, the output of the event-driven gating logic circuit is coupled with the clock input of the time to digital converter, and where the data signal received by the event-driven gating logic circuit includes a clock signal.

Example 20. The system of one of examples 17 to 19, where the time to digital converter includes an asynchronous time to digital converter, the output of the gating circuit is coupled with the clock input of the time to digital converter, the output of the event-driven gating logic circuit is coupled with the data input of the time to digital converter, and where the data signal received by the event-driven gating logic circuit includes a timestamp.

While this invention has been described with reference to illustrative embodiments, this description is not intended to be construed in a limiting sense. Various modifications and combinations of the illustrative embodiments, as well as other embodiments of the invention, will be apparent to persons skilled in the art upon reference to the description. It is therefore intended that the appended claims encompass any such modifications or embodiments. Unless noted otherwise, components in figures denoted with same numeral or identifier comprise the same component.

## Claims

1. A method (2400) to determine time of flight for light detection and ranging, the method (2400) comprising:
enabling (2402) a time to digital converter;
emitting (2404) a light pulse after enabling the time to digital converter;
initiating (2406) a sampling window (302A, 303A) at a time of emission of the light pulse;
using (2408) the time to digital converter to determine times of flight for photons detected during the sampling window (302A);
initiating (2410) a blanking period (302B) in response to concluding the sampling window (302A); and
disabling (2412) the time to digital converter in response to initiation of the blanking period (302B).

2. The method (2400) of claim 1, further comprising emitting a subsequent light pulse (306) after an end of the blanking period (302B).

3. The method of claim 2, further comprising re-enabling operation of the time to digital converter before emission of the subsequent light pulse, initiating a subsequent sampling window (303A) at a time of emission of the subsequent light pulse (306), using the time to digital converter to determine times of flight for photons detected during the subsequent sampling window (303A); initiating a subsequent blanking period after an end of the subsequent sampling window (303A); and disabling the time to digital converter after initiating the subsequent blanking period.

4. The method of any of claims 1 to 3, further comprising incrementing bins of a histogram depending on times of flight of photons detected during the sampling window (302A).

5. The method of any of claims 1 to 3, wherein using the time to digital converter to determine times of flight for photons detected during the sampling window comprises detecting (2502) a photon, opening (2504) a clock gate gating a clock input for the time to digital converter in response to detecting the photon, and sampling (2506) a time of flight of the photon after opening the clock gate.

6. The method of claim 5, wherein sampling the time of flight of the photon comprises sampling on a negative clock edge after opening the clock gate.

7. A method (2500) to determine time of flight for light detection and ranging, the method (2500) comprising:
detecting (2502) a photon;
opening (2504) a clock gate in response to detecting the photon; and
sampling (2506) data using a time to digital converter on a next edge of a clock signal passed by the clock gate after opening the clock gate.

8. The method of claim 7, wherein the next edge of the clock signal comprises a next falling edge of the clock signal.

9. The method of claim 7 or 8, further comprising initiating a count beginning with a time of emission of a light pulse and wherein sampling time data using the time to digital converter comprises sampling the count.

10. The method of any of claims 7 to 9, further comprising incrementing a bin of a histogram depending on the data sampled.

11. The method of any of claims 7 to 10, further comprising the time to digital converter; emitting a light pulse after enabling the time to digital converter; initiating a sampling window at a time of emission of the light pulse, the photon being detected during the sampling window; initiating a blanking period in response to concluding the sampling window; and disabling operation of the time to digital converter in response to initiation of the blanking period.

12. The method of any of claims 1 to 11, wherein the time to digital converter is a synchronous time to digital converter.

13. The method of any of claims 1 to 11, wherein the time to digital converter is an asynchronous time to digital converter.

14. The method of any of claims 7 to 13 in their dependency to claim 7, wherein sampling time data using a time to digital converter comprises sampling a timestamp indicating a time elapsed between emission of a light pulse and detecting the photon.

15. A power-saving time to digital converter system comprising:
a time to digital converter comprising an input to receive data and a clock input, the time to digital converter being configured to sample data received at the input in response to assertion of a signal received at the clock input; and
a gating circuit comprising an event-detection input configured to receive an event-detection signal and a gating input, wherein the gating circuit is configured to open and close an output of the gating circuit depending on a gating signal received at the gating input, the gating signal being synchronized with a time period of interest for operating the time to digital converter, and wherein the output is coupled with the time to digital converter.

16. The system of claim 15, further comprising an event-driven gating logic circuit comprising
an event-detection input configured to receive an event detection signal,
a data input configured to receive a data signal, and
an output coupled with time to digital converter, and wherein the event-driven gating logic circuit is configured to open its output in response to asserting the event-detection signal.

17. The system of claim 16, wherein the time to digital converter comprises a synchronous time to digital converter, the output of the gating circuit is coupled with the data input of the time to digital converter, the output of the event-driven gating logic circuit is coupled with the clock input of the time to digital converter, and wherein the data signal received by the event-driven gating logic circuit comprises a clock signal.

18. The system of claim 16, wherein the time to digital converter comprises an asynchronous time to digital converter, the output of the gating circuit is coupled with the clock input of the time to digital converter, the output of the event-driven gating logic circuit is coupled with the data input of the time to digital converter, and wherein the data signal received by the event-driven gating logic circuit comprises a timestamp..
